# EUROPEAN PATENT SPECIFICATION

(11) **EP 2 337 131 B1**
(45) Date of publication and mention of the grant of the patent: **23.09.2015**
(21) Application number: 10180639.6
(22) Date of filing: 28.09.2010
(51) Int. Cl.: H01M 8/02, H01M 8/24

(54) **Two-sided fluid flow plate assembly having parallel flow channels**
Zweiseitiger Flüssigkeitsverteiler mit parallelen Flusskanälen
Plaque d'écoulement de fluide bilatérale ayant des canaux d'écoulement parallèles

(30) Priority: 07.12.2009 US 267387 P; 12.03.2010 TW 99107216
(43) Date of publication of application: 22.06.2011
(73) Proprietor: Industrial Technology Research Institute, Chutung Hsinchu 31040, Taiwan (TW)
(72) Inventor: Chen, Chi-Chang, 513, Taiwan, Changhua County (TW); Shiu, Huan-Ruei, 883, Taiwan, Penghu County (TW); Chang, Wen-Chen, 310, Taiwan, Hsinchu County (TW); Tsau, Fanghei, 802, Taiwan, Kaohsiung City (TW)
(74) Representative: Gulde & Partner

(56) References cited:
- JP-A- 5 159 790
- US-A- 5 686 199
- US-A1- 2006 269 821
- US-A1- 2009 075 153

## Description

### Technical Field

This application relates to fluid flow plate assemblies having parallel flow channels.

### Description of Related Art

Fluid flow plates are structures that are designed for fluid-related applications, such as for carrying, delivering, dividing, and/or distributing one or more types of fluids. The term "fluid" is used here in a broad sense, which can be anything that is capable of flowing from one point to another. For example, a fluid may include air, gas, liquid, viscous fluid, etc., each of which is capable of flowing or moving itself or a part of it from one point to another.

US 2009/0075153 A1 describes a fuel cell system including a middle plate and an electricity generating unit that generates electricity by a reaction of air and fuel. The middle plate includes a plurality of unit sections.

US 2006/0269821 A1 describes a fuel cell comprising: a fuel electrode and an oxidant electrode; current collecting plates; a fuel electrode channel member; an oxidant electrode channel member.

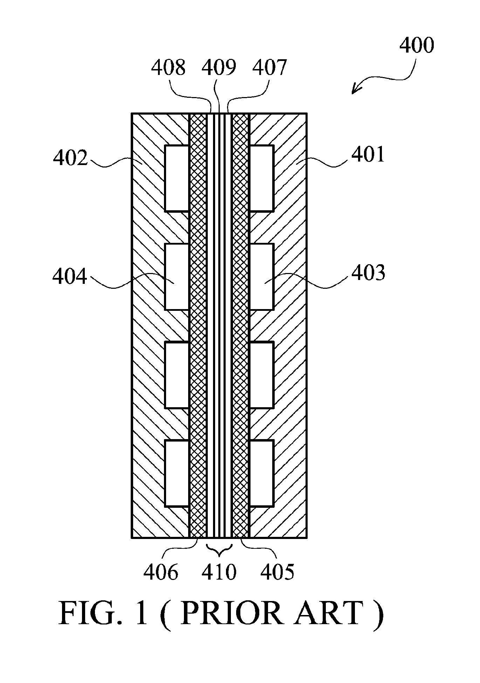

As an illustrative example, one of the many uses for fluid flow plates is fuel cell applications, in which fluid flow plates may be used to transport, guide, and/or distribute one or more kinds of "fuel", which may be in a liquid or gaseous form, for generating electric power. FIG. 1 illustrates a sectional view of an exemplary fuel cell device in the prior art. Referring to FIG. 1, a single fuel cell 400, such as a Proton Exchange Membrane Fuel Cell (also known as "PEMFC"), may include a membrane electrode assembly 410, two gas diffusion layers 405 and 406, and two fluid flow plates 401 and 402. As illustrated, the two gas diffusion layers 405 and 406 may sandwich between them the membrane electrode assembly 410, and the two fluid flow plates 401 and 402 may sandwich between them both the membrane electrode assembly 410 and the two gas diffusion layers 405 and 406. The fluid flow plates 401 and 402 each may provide one or more flow channels, such as flow channels 403 and 404, and a reactant fluid may flow through each of the flow channels. As an example, the membrane electrode assembly 410 may include a proton exchange membrane 409, an anode catalyst layer 407, and a cathode catalyst layer 408. The anode and cathode catalyst layers 407 and 408 each may include platinum or platinum alloy, which may serve as a catalyst and facilitate electrochemical fuel cell reactions.

To facilitate the efficiency or ease of fluid distribution or that of an accompanying components, such as a fuel cell device, it may be desirable to provide fluid flow plates that may increase the ease of flow movement or distribution, decrease flow resistance, simplify system or component design, or provide different fluid flow characteristics.

### SUMMARY

A fluid flow plate assembly of the present invention includes a first manifold, a second manifold, a first flow channel, and a second flow channel as well as third and fourth flow channels coupled between the first manifold and a third manifold, wherein the second manifold and the third manifold are located at two opposite sides of the first manifold. The first manifold has a fluid inlet for receiving an incoming fluid and extends along a first direction to provide a channel for transporting the incoming fluid along the first direction. The first manifold has at least two distribution outlets, each located in at least a portion of a sidewall region of the first manifold. The first manifold releases at least one portion of the incoming fluid as a released fluid through each distribution outlet. The second manifold has a fluid outlet for discharging a discharged fluid, and the discharged fluid includes at least one portion of the incoming fluid. The second manifold extends along a second direction to provide a channel for transporting the discharged fluid along the second direction. The second manifold receives the discharged fluid through at least two discharged fluid inlets on the second manifold. The first flow channel is coupled between the first manifold and the second manifold through a first one of the distribution outlets and a first one of the discharged fluid inlets for distributing a first portion of the released fluid. The first fluid flow channel has multiple channel sections extending in at least two directions and extending substantially along a fluid distribution plane. The first portion of the released fluid flows through the first fluid flow channel and to the first discharged fluid inlet as a first portion of the discharged fluid. The second flow channel is parallel to and shares both the first and second manifolds with the first flow channel, with a dividing wall between the first and second flow channels. The second flow channel is coupled between the first manifold and the second manifold through a second one of the distribution outlet and a second one of the discharged fluid inlets for distributing a second portion of the released fluid. The second fluid flow channel has multiple channel sections extending substantially along the fluid distribution plane. The second portion of the released fluid flow through the second fluid flow channel and to the second discharged fluid inlet as a second portion of the discharged fluid, wherein the first direction is substantially parallel with the fluid distribution plane, and the second direction is substantially parallel with the fluid distribution plane.

The fluid flow assembly further comprises third and fourth flow channels coupled between the first manifold and a third manifold, wherein the second manifold and the third manifold are located at two opposites of the first manifold, each of the third and fourth flow channels is coupled between an additional distribution outlet of the first manifold and a discharged fluid inlet of the third manifold for distributing a portion of the released fluid, each of the third and fourth flow channels has multiple channel sections extending substantially along the fluid distribution plane, wherein the third flow channel is parallel to the fourth flow channel with a dividing wall between the third and fourth flow channels, and the each additional distribution outlet of the first manifold is located in at least a portion of a sidewall region of the first manifold.

### BRIEF DESCRIPTION OF DRAWINGS

Embodiments disclosed herein may be better understood with references made to the accompanying drawings, wherein Fig. 4A to 5C illustrate the present invention:
FIG. 1 illustrates a sectional view of an exemplary fuel cell device in the prior art;
FIG. 2A illustrates an exploded view diagram of an exemplary fuel cell module device (no part of invention);
FIG. 2B illustrates a side view diagram of the fuel cell module device illustrated in FIG. 2A (no part of invention);
FIG. 2C illustrates a sectional view, along line B-B' in FIG. 2B, of the fuel cell module device illustrated in FIG. 2B (no part of invention);
FIG. 3A illustrates a perspective diagram of an exemplary fluid flow plate assembly (no part of invention);
FIG. 3B illustrates a sectional view of a manifold in the fluid flow plate assembly illustrated in FIG. 3A (no part of invention);
FIG. 4A illustrates a perspective diagram of a fluid flow plate assembly according to the invention;
FIG. 4B illustrates a side view of the fluid flow plate assembly illustrated in FIG. 4A;
FIG. 5A illustrates a perspective diagram of a fluid flow plate assembly according to the invention;
FIG. 5B illustrates a side view of the fluid flow plate assembly illustrated in FIG. 5A; and
FIG. 5C illustrates a sectional view, along line X1-X2 in FIG. 5B, of a manifold in the fluid flow plate assembly illustrated in FIG. 5B.

### DETAILED DESCRIPTION

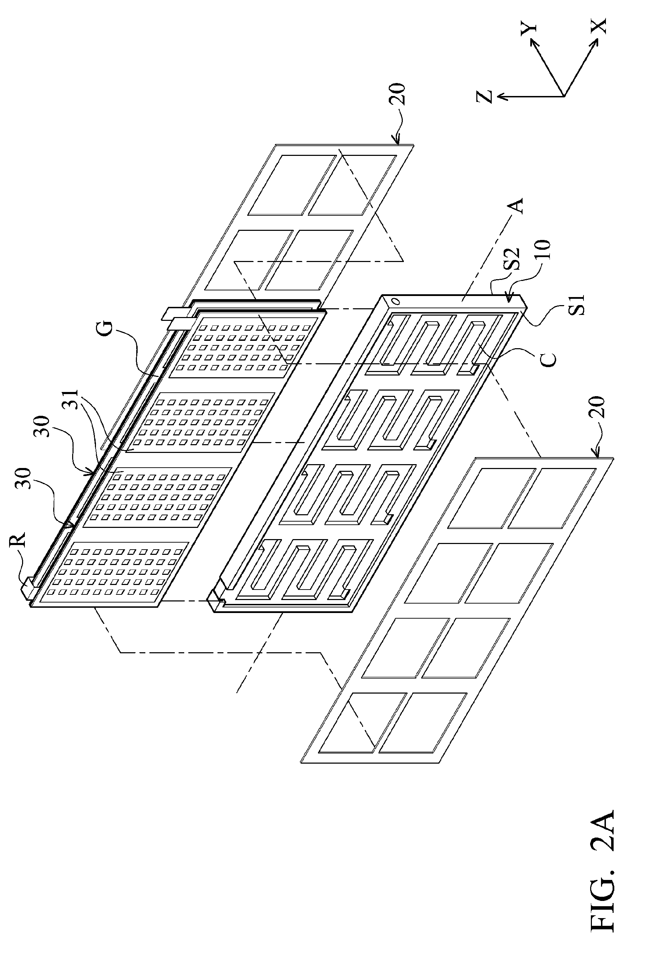

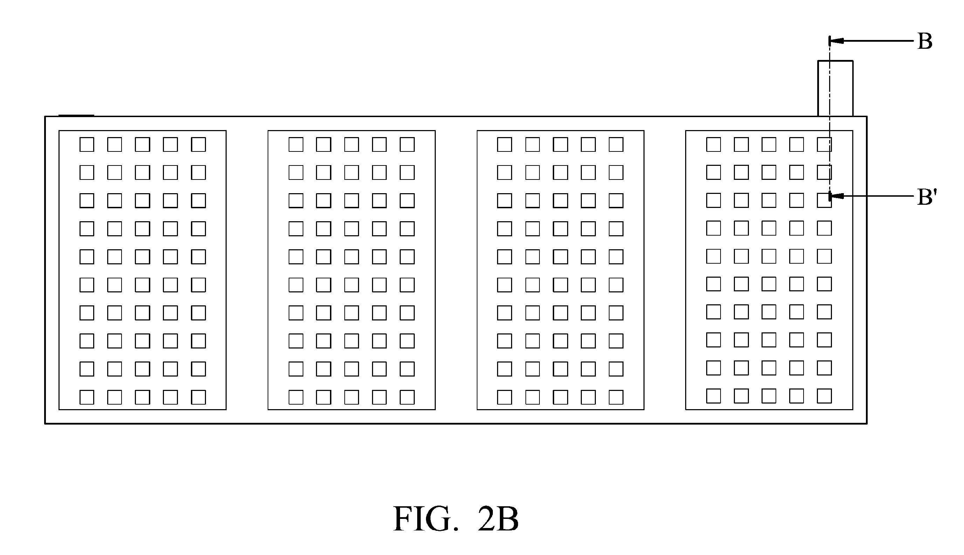

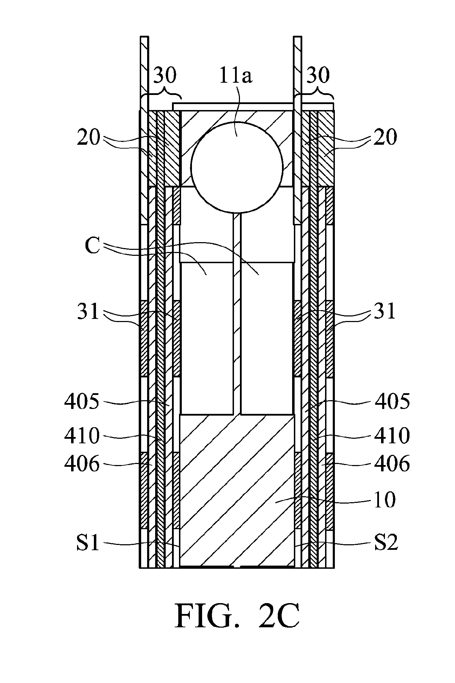

Embodiments disclosed herein may include parallel flow channels placed on opposite sides of a dividing wall to form a part of a fuel cell device. In some embodiments, multiple flow channels may share one or two common manifolds for the intake and/or discharge of a fluid, wherein Fig. 2A to Fig. 3B are no part of the invention. FIG. 2A illustrates an exploded view diagram of an exemplary fuel cell module or device consistent with an embodiment. A fuel cell system may have multiple fuel cell modules stacked sequentially to provide a complete system or fuel cell battery. Referring to FIG. 2A, a fuel cell module or device may include a fluid flow plate assembly 10, one sealing members 20, and one fuel cell core 30. Two fuel cell cores 30 and two sealing members 20 are illustrated in FIG. 2A to illustrate an exemplary embodiment in which there is a fuel cell core on each side of the flow field plate assembly 10. Each fuel cell cores 30 may include a plurality of current collectors 31. As illustrated in FIG. 2B and 2C, each of the fuel cell cores 30 may further include a membrane electrode assembly 410 and two gas diffusion layers 405 and 406 that sandwich between them. Depending on the design, the current collectors may be part of the membrane electrode assembly to collect or conduct the electric current generated by the fuel cell reaction occur at the membrane electrode assembly. The gas diffusion layers and the current collectors 31 may be disposed on the opposite sides, i.e., anode and cathode sides, of the membrane electrode assembly, and each of the current collectors 31 may be exposed to a neighboring flow channel to facilitate electrochemical reactions of the fuel cell device.

As shown in FIG. 2A, the fluid flow plate assembly 10 may be placed in a gap G between the two cores 30. Flow channels, each of which may be constructed similar to a flow channel C, may be formed on the two sides, such as a first side S 1 and a second side S2, of the fluid flow plate assembly 10. In one embodiment, a first one of cores 30, a first one of sealing members 20, the fluid flow plate assembly 10, a second one of sealing members 20, and a second one of cores 30 may be stacked sequentially, and those components may be bound together via one or more coupling members, such as a clamp R, some type of sealant, or any other binding devices or medium. Each of the two sealing members 20 that is placed between one side of the fluid flow plate assembly 10 and the corresponding core 30 may help to provide a fluid/air-tight seal and avoid or reduce leakage.

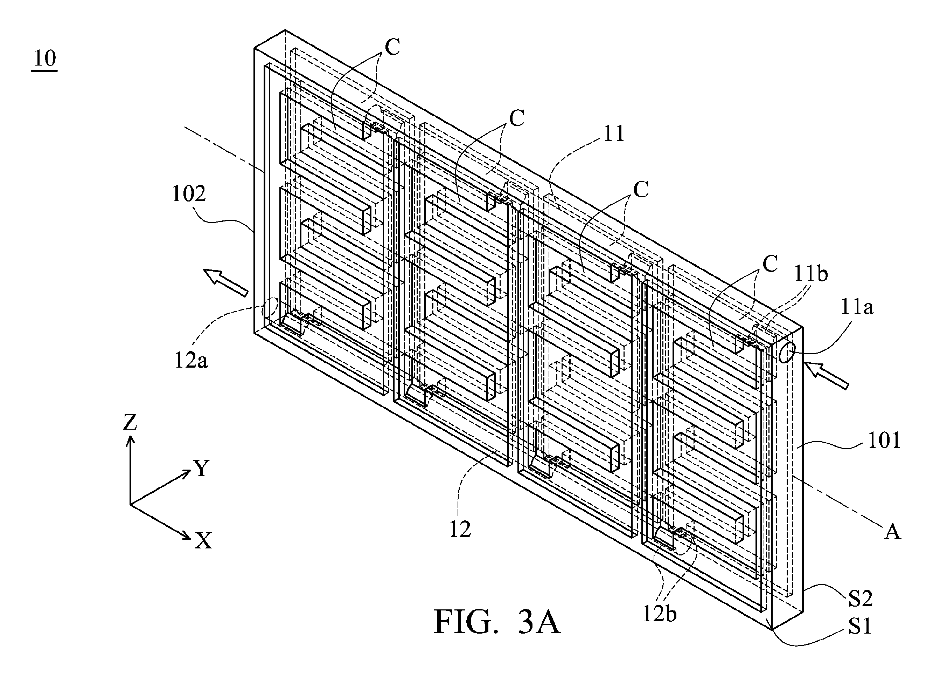

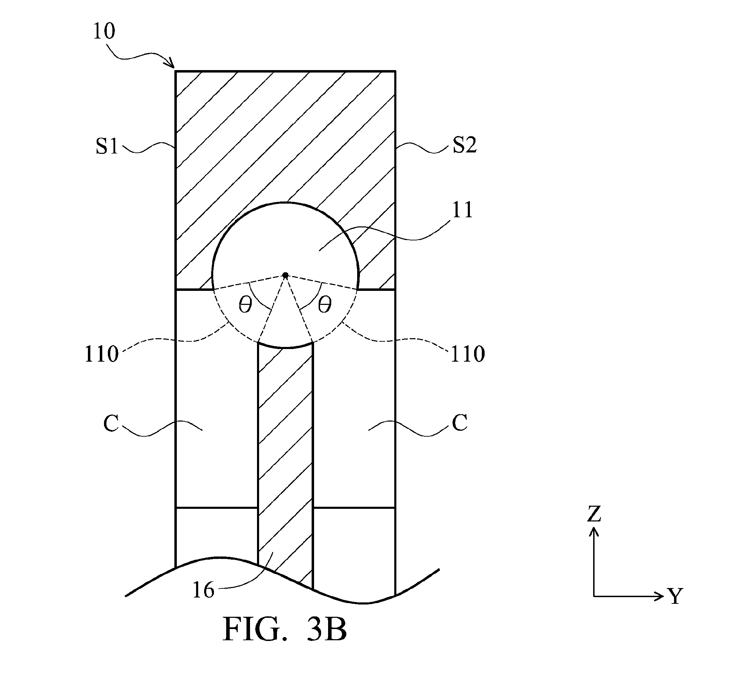

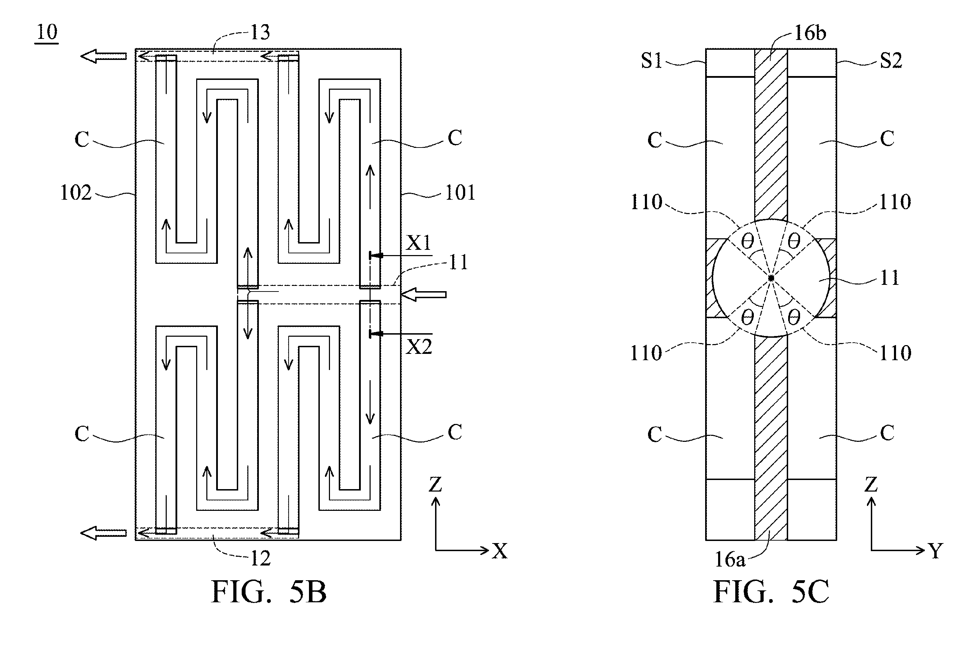

Referring to FIG. 3A, the fluid flow plate assembly 10 may be a rectangular or substantially rectangular structure in one embodiment, and one or more flow channels C may be arranged along a fluid distribution plane thereof. In one embodiment, the fluid distribution plane may be parallel with a central axis A or extend along the central axis A. The flow channels C may be placed on both sides of the fluid flow plate assembly 10, with a dividing wall (shown as element 16 in FIG. 3B and 16a and 16b in FIG. 5C) between each pair of opposing flow channels. Each pair of the opposing flow channels may have their outer surfaces exposed respectively to the first and second sides S1 and S2 of the fluid flow plate assembly 10. In one embodiment, the fluid flow plate assembly 10 may include a first manifold 11 and a second manifold 12 that communicate with the flow channels C. Depending on its applications, design need, system size, or other considerations, a fluid flow plate assembly 10 may have two or more flow channels arranged (or expanded) along the X axis, the Y axis, and/or the Z axis as shown in FIG. 3A. FIG. 3A illustrates an embodiment in which two flow channels are arranged along the Y axis and four flow channels are arranged along the X axis.

As illustrated by the arrows in FIG. 3A, a reactant/incoming fluid may enter the first manifold 11 from a first end 101, such as through a fluid inlet of the fluid flow plate assembly 10. Part of the incoming fluid may flow through one of the flow channels C, which provides an exposed reaction area for the fluid released into the flow channel (released fluid), such as a reaction area exposed to an exchange membrane of one or more fuel cell systems. The fluid, partially or fully reacted, may be discharged through the second manifold 12, and the discharged fluid may leave the fluid flow plate assembly from a second end 102, through a fluid outlet of the fluid flow plate assembly 10.

In one embodiment, the fluid flow plate assembly 10 may include the first manifold 11, the second manifold 12, and two or more fluid flow channels C coupled between the first manifold 11 and the second manifold 12. The first manifold 11 has its fluid inlet 11 a for receiving the incoming fluid and extends along a first direction, such as the direction indicated by the arrow at the right in FIG. 3A, to provide a channel for transporting the incoming fluid partially along the first direction. The second manifold 12 has its fluid outlet 12a for discharging a discharged fluid, and the discharged fluid may include a portion of the incoming fluid, which may have been partially or fully reacted. The second manifold 12 may extend along a second direction, such as the direction indicated by the arrow at the left in FIG. 3A, to provide a channel for transporting the discharged fluid partially along the second direction. As illustrated in FIG. 3A, both the first and second directions may be substantially parallel with the fluid distribution plane of the fluid flow channels C.

The first manifold 11 may have two or more distribution outlets, such as distribution outlets 11b, and each may be located in at least a portion of a sidewall region of the first manifold 11. The first manifold 11 may release a portion of the incoming fluid as a released fluid through the distribution outlets. The second manifold 12 may receive the discharged fluid through at two or more discharged fluid inlets, such as discharged fluid inlet 12b, and each may be located in at least a portion of a sidewall region of the second manifold 12. The fluid flow channels C, as illustrated in FIG. 3A, may be coupled between at least one of the distribution outlets (of the first manifold 11) and at least one of the discharged fluid inlets (of the second manifold 12) for distributing a portion of the released fluid from the first manifold.

For a pair of the flow channels C that are placed on the two sides S1 and S2 of the fluid flow plate assembly 10, they may share a common set of fluid intake and discharge manifolds, such as the first manifold 11 and the second manifold 12. In one embodiment, the first flow channel C at the first side S1 is coupled between the first manifold 11 and the second manifold 12 through a first distribution outlet and a first discharged fluid inlet, for distributing a first portion of the released fluid. As illustrated in Fig. 3A, the first flow channel may have multiple channel sections extending in at least two directions and extending substantially along the fluid distribution plane. A first portion of the released fluid may flow through the first flow channel and to the first discharged fluid inlet as a first portion of the discharged fluid.

In one embodiment, the second flow channel C at the second side S2 is parallel to the first flow channel C at the first side S 1 with a dividing wall between the first and second flow channels (or between the two sides S1 and S2). The second flow channel C is coupled between the first manifold 11 and the second manifold 12 through a second distribution outlet and a second discharged fluid inlet for distributing a second portion of the released fluid. Similar to the first flow channel, the second flow channel may have multiple channel sections extending substantially along the fluid distribution plane. A second portion of the released fluid may flow through the second flow channel and to the second discharged fluid inlet as a second portion of the discharged fluid.

In one embodiment, the first and second manifolds 11 and 12 may be embedded in a fluid flow plate assembly. For example, the fluid flow plate assembly 10 may have the first and second manifolds 11 and 12 incorporated in the assembly, which can be manufactured as one or more molded pieces. The first and second manifolds 11 and 12 may extend substantially along (or substantially parallel to) the central axis A or the fluid distribution plane. Flow resistance can be reduced in some embodiments to provide even or substantially even flow rates and/or to provide consistent or substantially consistent concentrations of the reactant fluid distributed. In some embodiments, increased consistency in flow rates or concentrations may improve the efficiency of fuel cell devices coupled with the fluid flow plate assembly.

FIG. 3B illustrates a sectional view of a manifold, such as the first manifold 11 (or the second manifold 12), in the fluid flow plate assembly illustrated in FIG. 3A. Referring to FIG. 3B, the manifold 11 may have a round (or nearly round) cross section with two opening 110 at two sides, each of which may serve as a distribution outlet in at least a portion of a sidewall region of the first manifold 11, such as distribution outlets 11 a illustrated in FIG. 3A. The first manifold 11, therefore, may release some portion of the incoming fluid as a released fluid through the distribution outlets. The first manifold 11 may have one or more openings 110 as a distribution outlet, and the opening 110 may occupy an angle range θ within the range of about 0 to about 180 degrees of a section of the first manifold 11. For example, the openings 110 illustrated in FIG. 3B may be about 70 degrees, occupying the lower left quarter and the lower right quarter of the round cross-section illustrated. Depending on the design of a system, a manifold, fuel distribution rate, rate control among different fluid flow channels, and other considerations, the angle range may be smaller or larger, and the direction of the openings may vary.

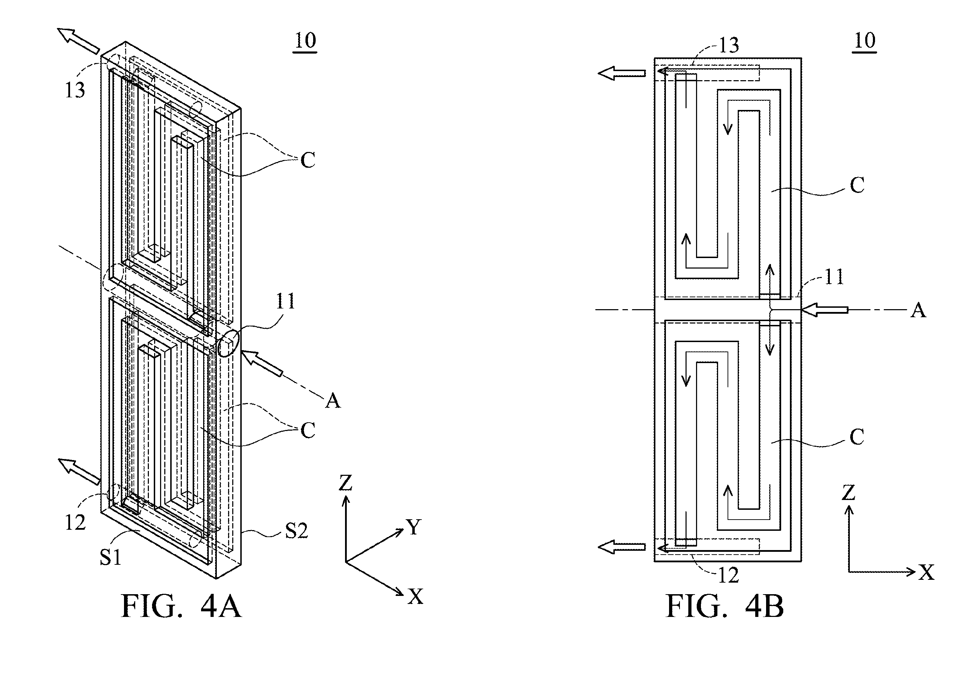

FIG. 4A (being part of the invention) illustrates a perspective diagram of a fluid flow plate assembly of the invention, and FIG. 4B illustrates a side view of the fluid flow plate assembly illustrated in FIG. 4A. Referring to FIGs. 4A and 4B, the fluid flow plate assembly 10 includes several flow channels C formed on the first and second sides S1 and S2 thereof and arranged along the Z axis. The fluid flow plate assembly 10 includes the first manifold 11 disposed at or near the central axis A of the fluid flow plate assembly 10 and second and third discharge manifolds 12 and 13 disposed respectively below and above the first manifold 11. Because the first manifold 11 and the discharge manifolds 12 and 13 in FIGs. 4A and 4B are embedded in the fluid flow plate assembly 10 and substantially parallel to the central axis A, flow resistance can be reduced to facilitate more rapid and even reactant fluid flow through the fluid flow plate assembly 10 compared to other designs.

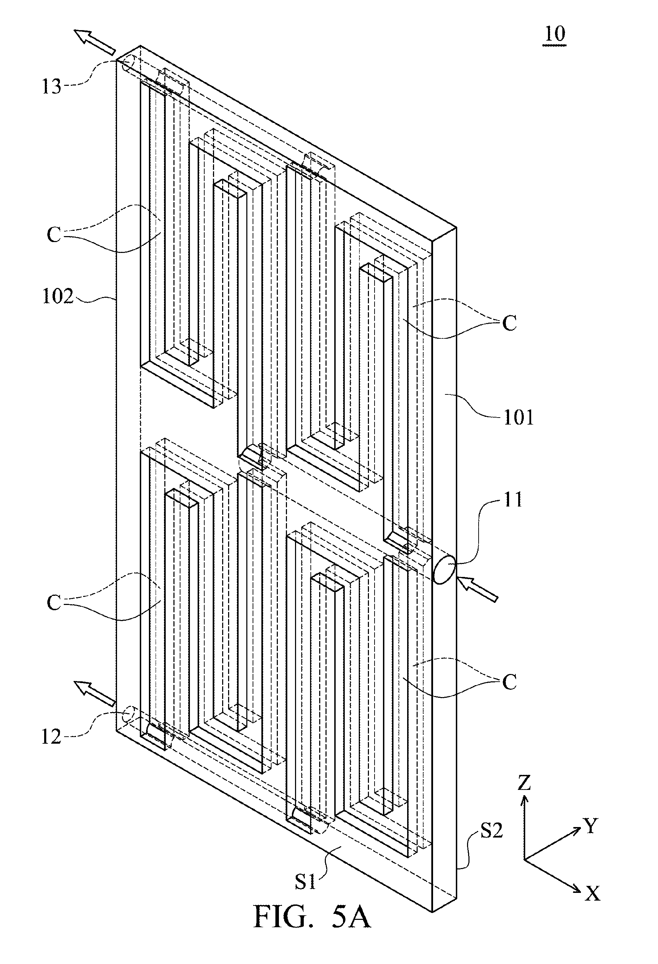

FIG. 5A illustrates a perspective diagram of a fluid flow plate assembly of the invention, and FIG. 5B illustrates a side view of the fluid flow plate assembly illustrated in FIG. 5A. Referring to FIGs. 5A and 5B, the fluid flow plate assembly 10 includes several flow channels C formed on the first and second sides S1 and S2 thereof and along both the X axis and the Z axis, providing a three-dimensional structure of multiple flow channels. In this embodiment, the flow channels C are arranged in a 2-dimensional "matrix" (along both the X and Z axis) on each of the opposite sides of the fluid flow plate assembly 10.

As the arrows indicate in FIGs. 5A and 5B, the reactant fluid enters the fluid flow plate assembly 10 via the first manifold 11 from the first end 101 of the fluid flow plate assembly 10, flows through the flow channels C to the second manifold 12 or the third manifold 13 (depending on which flow channel the fluid enters), and is discharged from the fluid flow plate assembly 10 via the second manifold 12 or the third manifold 13. Alternatively, the reactant fluid enters the fluid flow plate assembly 10 via the second manifold 12 and the third manifold 13 from a second end 102 of the fluid flow plate assembly 10, flows through the flow channels C to the first manifold 11, and exit the fluid flow plate assembly 10 via the first manifold 11. In another embodiment, the first manifold 11 has a sealed fluid inlet, resulting in a fluid flow from the manifold 12 to the first manifold 11 and then to the third manifold 13.

FIG. 5C illustrates a sectional view along line XI-X2 in FIG. 5B, of the first manifold 11 in the fluid flow plate assembly illustrated in FIG. 5B. Referring to FIG. 5C, the first manifold 11 in FIGs. 5A and 5B has a round (or nearly round) cross section with four openings 110 formed on the upper-left, upper-right, lower-left and lower-right sides, each of which may serve as a distribution outlet, in at least a portion of a sidewall region of the first manifold 11 and communicates with a separate flow channel C at the corresponding locations of the fluid flow plate assembly 10. In one embodiment, respectively for the design above and below the first manifold 11, two flow channels C are placed on both sides of the fluid flow plate assembly 10, with a dividing wall (16a for the lower pair of opposing channels C and 16b for the upper pair of opposing channels in FIG. 5C) between each pair of opposing flow channels. As shown in FIG. 5C, the openings 110 are placed symmetrically around the first manifold 11 in one embodiment, wherein the angle range θ of each of the openings 110 is preferred in the range of more than about 0 to less than about 90 degrees. For example, the openings 110 may have an angle range θ of about 30 degrees as illustrated in FIG. 5C. Depending on the design of a system, a manifold, fuel distribution rate, rate control among different fluid flow channels, and other considerations, the angle range is smaller or larger, the direction of the openings is variable, and the angle range and direction of each opening is variable.

The invention provides fluid flow plate assemblies that may be coupled with fuel cell modules or devices. Because the manifolds are embedded in the fluid flow plate assembly, flow resistance can be reduced in some instances to prevent uneven reactant fluid flow rates and inconsistent distributed concentrations of the reactant fluid, improving the efficiency of the fuel cell.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A fluid flow plate assembly, comprising:
a first manifold having a fluid inlet for receiving an incoming fluid, the first manifold extending along a first direction and providing a channel for transporting the incoming fluid along the first direction, the first manifold having at least two distribution outlets, each located in at least a portion of a sidewall region of the first manifold, wherein the first manifold releases at least one portion of the incoming fluid as a released fluid through each distribution outlet;
a second manifold having a fluid outlet for discharging a discharged fluid, the discharged fluid comprising at least one portion of the incoming fluid, the second manifold extending along a second direction and providing a channel for transporting the discharged fluid along the second direction, the second manifold receiving the discharged fluid through at least two discharged fluid inlets on the second manifold;
a first flow channel being coupled between the first manifold and the second manifold through a first one of the distribution outlets and a first one of the discharged fluid inlets for distributing a first portion of the released fluid, the first fluid flow channel having multiple channel sections extending in at least two directions and extending substantially along a fluid distribution plane, the first portion of the released fluid flowing through the first fluid flow channel and to the first discharged fluid inlet as a first portion of the discharged fluid; and
a second flow channel being parallel to the first flow channel with a dividing wall between the first and second flow channels, the second flow channel coupled between the first manifold and the second manifold through a second one of the distribution outlets and a second one of the discharged fluid inlets for distributing a second portion of the released fluid, the second fluid flow channel having multiple channel sections extending substantially along the fluid distribution plane, the second portion of the released fluid flowing through the second fluid flow channel and to the second discharged fluid inlet as a second portion of the discharged fluid,
wherein the first direction is substantially parallel with the fluid distribution plane, and the second direction is substantially parallel with the fluid distribution plane; further comprising:
third and fourth flow channels coupled between the first manifold and a third manifold, wherein the second manifold and the third manifold are located at two opposites of the first manifold, each of the third and fourth flow channels being coupled between an additional distribution outlet of the first manifold and a discharged fluid inlet of the third manifold for distributing a portion of the released fluid, each of the third and fourth flow channels having multiple channel sections extending substantially along the fluid distribution plane,
wherein the third flow channel is parallel to the fourth flow channel with a dividing wall between the third and fourth flow channels, and the each additional distribution outlet of the first manifold is located in at least a portion of a sidewall region of the first manifold.

2. The fluid flow plate assembly of claim 1, further comprising additional fluid flow channels arranged substantially along the first direction following at least one of the first and second fluid flow channels.

3. The fluid flow plate assembly of claim 1, wherein the first manifold has at least one opening as one of the first and second distribution outlets, the at least one opening occupying an angle range within a range of about 0 to about 180 degrees of a section of the first manifold.

4. The fluid flow plate assembly of claim 3, wherein the at least one opening occupies an angle range within a range of more than 0 to less than 90 degrees of a section of the first manifold.

5. The fluid flow plate assembly of claim 1, wherein the second manifold receives at least one of the first and second portions of the discharged fluid through at least a portion of a sidewall region of the second manifold.

6. The fluid flow plate assembly of claim 5, wherein the second manifold has at least one opening as one of the first and second discharged fluid inlets, the at least one opening occupying an angle range within a range of about 0 to about 180 degrees of a section of the second manifold.

7. The fluid flow plate assembly of claim 6, wherein the at least one opening occupies an angle range within a range of more than 0 to less than 90 degrees of a section of the second manifold.

## Patentansprüche

1. Fluidströmungsplattenbaugruppe, umfassend:
einen ersten Verteiler mit einem Fluideinlass zur Aufnahme eines einströmenden Fluids, wobei sich der erste Verteiler entlang einer ersten Richtung erstreckt und einen Kanal zum Transport des einströmenden Fluids entlang der ersten Richtung bildet, wobei der erste Verteiler mindestens zwei Verteilerauslässe aufweist, die jeweils in mindestens einem Teil einer Seitenwandregion des ersten Verteilers liegen, wobei der erste Verteiler mindestens einen Teil des einströmenden Fluids als freigesetztes Fluid durch jeden Verteilerauslass freisetzt,
einen zweiten Verteiler mit einem Fluidauslass zum Abführen eines abgeführten Fluids, wobei das abgeführte Fluid mindestens einen Teil des einströmenden Fluids umfasst, wobei sich der zweite Verteiler entlang einer zweiten Richtung erstreckt und einen Kanal zum Transport des abgeführten Fluids entlang der zweiten Richtung bildet, wobei der zweite Verteiler das abgeführte Fluid durch mindestens zwei Abführfluideinlässe am zweiten Verteiler aufnimmt,
einen ersten zwischen dem ersten Verteiler und dem zweiten Verteiler durch einen ersten Verteilerauslass und einen ersten Abführfluideinlass zur Verteilung eines ersten Teils des freigesetzten Fluids gekoppelten Strömungskanal, wobei der erste Fluidströmungskanal mehrere sich mindestens in zwei Richtungen erstreckende und sich im Wesentlichen entlang einer Fluidverteilungsebene erstreckende Kanalabschnitte aufweist, wobei der erste Teil des freigesetzten Fluids als erster Teil des abgeführten Fluids durch den ersten Fluidströmungskanal und zum ersten Abführfluideinlass fließt, und
einen zweiten parallel zum ersten Strömungskanal verlaufenden Strömungskanal mit einer Trennwand zwischen dem ersten und zweiten Strömungskanal, wobei der zweite Strömungskanal zwischen dem ersten Verteiler und dem zweiten Verteiler durch einen zweiten Verteilerauslass und einen zweiten Abführfluideinlass zur Verteilung eines zweiten Teils der freigesetzten Flüssigkeit gekoppelt ist, wobei der zweite Fluidströmungskanal mehrere sich im Wesentlichen entlang der Fluidverteilungsebene erstreckende Kanalabschnitte aufweist, wobei der zweite Teil der freigesetzten Flüssigkeit als zweiter Teil des abgeführten Fluids durch den zweiten Fluidströmungskanal und zum zweiten Abführfluideinlass fließt,
wobei die erste Richtung im Wesentlichen parallel zur Fluidverteilungsebene ist und die zweite Richtung im Wesentlichen parallel zur Fluidverteilungsebene ist, ferner umfassend:
einen dritten und vierten zwischen dem ersten Verteiler und einem dritten Verteiler gekoppelten Strömungskanal, wobei der zweite Verteiler und der dritte Verteiler an zwei gegenüberliegenden Seiten des ersten Verteilers liegen, wobei der dritte und vierte Strömungskanal jeweils zwischen einem weiteren Verteilerauslass des ersten Verteilers und einem Abführfluideinlass des dritten Verteilers zur Verteilung eines Teils der freigesetzten Flüssigkeit gekoppelt sind, wobei der dritte und vierte Strömungskanal jeweils mehrere sich im Wesentlichen entlang der Fluidverteilungsebene erstreckende Kanalabschnitte aufweisen,
wobei der dritte Strömungskanal parallel zum vierten Strömungskanal verläuft, eine Trennwand zwischen dem dritten und vierten Strömungskanal liegt und jeder weitere Verteilerauslass des ersten Verteilers in mindestens einem Teil einer Seitenwandregion des ersten Verteilers liegt.

2. Fluidströmungsplattenbaugruppe von Anspruch 1, ferner umfassend weitere im Wesentlichen entlang der ersten Richtung nach mindestens einem ersten oder zweiten Fluidströmungskanal angeordnete Fluidströmungskanäle.

3. Fluidströmungsplattenbaugruppe von Anspruch 1, wobei der erste Verteiler mindestens eine Öffnung als einen ersten oder zweiten Verteilerauslass aufweist, wobei die mindestens eine Öffnung einen Winkelbereich im Bereich von etwa 0 bis etwa 180 Grad eines Abschnitts des ersten Verteilers einnimmt.

4. Fluidströmungsplattenbaugruppe von Anspruch 3, wobei die mindestens eine Öffnung einen Winkelbereich im Bereich von mehr als 0 bis weniger als 90 Grad eines Abschnitts des ersten Verteilers einnimmt.

5. Fluidströmungsplattenbaugruppe von Anspruch 1, wobei der zweite Verteiler mindestens einen ersten oder zweiten Teil des abgeführten Fluids durch mindestens einen Teil einer Seitenwandregion des zweiten Verteilers aufnimmt.

6. Fluidströmungsplattenbaugruppe von Anspruch 5, wobei der zweite Verteiler mindestens eine Öffnung als einen ersten oder zweiten Abführfluidauslass aufweist, wobei die mindestens eine Öffnung einen Winkelbereich im Bereich von etwa 0 bis etwa 180 Grad eines Abschnitts des zweiten Verteilers einnimmt.

7. Fluidströmungsplattenbaugruppe von Anspruch 6, wobei die mindestens eine Öffnung einen Winkelbereich im Bereich von mehr als 0 bis weniger als 90 Grad eines Abschnitts des zweiten Verteilers einnimmt.

## Revendications

1. Ensemble de plaque d'écoulement de fluide, comprenant :
un premier collecteur ayant une entrée de fluide destinée à recevoir un fluide entrant, le premier collecteur s'étendant le long d'une première direction et fournissant un canal pour transporter le fluide entrant le long de la première direction, le premier collecteur ayant au moins deux sorties de distribution, chacune située dans au moins une portion d'une région de paroi latérale du premier collecteur, dans lequel le premier collecteur relâche au moins une portion du fluide entrant en tant que fluide relâché à travers chaque sortie de distribution ;
un deuxième collecteur ayant une sortie de fluide pour décharger un fluide déchargé, le fluide déchargé comprenant au moins une portion du fluide entrant, le deuxième collecteur s'étendant le long d'une deuxième direction et fournissant un canal pour transporter le fluide déchargé le long de la deuxième direction, le deuxième collecteur recevant le fluide déchargé à travers au moins deux entrées de fluide déchargé sur le deuxième collecteur ;
un premier canal d'écoulement couplé entre le premier collecteur et le deuxième collecteur à travers une première sortie parmi les sorties de distribution et une entrée parmi les entrées de fluide déchargé pour distribuer une première portion du fluide relâché, le premier canal d'écoulement de fluide ayant de multiples tronçons de canal s'étendant dans au moins deux directions et s'étendant essentiellement le long d'un plan de distribution de fluide, la première portion du fluide relâché s'écoulant à travers le premier canal d'écoulement de fluide et vers la première entrée de fluide déchargé en tant que première portion du fluide déchargé ; et
un deuxième canal d'écoulement étant parallèle au premier canal d'écoulement avec une paroi de division entre le premier et le deuxième canal d'écoulement, le deuxième canal d'écoulement étant couplé entre le premier collecteur et le deuxième collecteur par le biais d'une deuxième sortie parmi les sorties de distribution et d'une deuxième entrée parmi les entrées de fluide déchargé pour distribuer une deuxième portion du fluide relâché, le deuxième canal d'écoulement de fluide ayant de multiples tronçons de canal s'étendant essentiellement le long du plan de distribution de fluide, la deuxième portion du fluide relâché s'écoulant à travers le deuxième canal d'écoulement de fluide et vers la deuxième entrée de fluide déchargé en tant que deuxième portion du fluide déchargé,
dans lequel la première direction est essentiellement parallèle au plan de distribution de fluide, et la deuxième direction est essentiellement parallèle au plan de distribution de fluide ; comprenant également :
des troisième et quatrième canaux d'écoulement couplés entre le premier collecteur et un troisième collecteur, dans lequel le deuxième collecteur et le troisième collecteur sont situés à deux endroits opposés du premier collecteur, chacun des troisième et quatrième canaux d'écoulement étant couplé entre une sortie de distribution supplémentaire du premier collecteur et une entrée de fluide déchargé du troisième collecteur pour distribuer une portion du fluide relâché, chacun des troisième et quatrième canaux d'écoulement ayant de multiples tronçons de canal s'étendant essentiellement le long du plan de distribution de fluide,
dans lequel le troisième canal d'écoulement est parallèle au quatrième canal d'écoulement avec une paroi de division entre les troisième et quatrièmes canaux d'écoulement, et chaque sortie de distribution supplémentaire du premier collecteur est située dans au moins une portion d'une région de paroi latérale du premier collecteur.

2. Ensemble de plaque d'écoulement de fluide selon la revendication 1, comprenant également des canaux d'écoulement de fluide supplémentaires agencés essentiellement le long de la première direction à la suite d'au moins un des premier et deuxième canaux d'écoulement de fluide.

3. Ensemble de plaque d'écoulement de fluide selon la revendication 1, dans lequel le premier collecteur a au moins une ouverture en tant que l'une des première et deuxième sorties de distribution, l'ouverture au moins au nombre de un occupant une plage angulaire à l'intérieur d'une plage comprise entre environ 0 et environ 180 degrés d'un tronçon du premier collecteur.

4. Ensemble de plaque d'écoulement de fluide selon la revendication 3, dans lequel l'ouverture au moins au nombre de un occupe une plage angulaire à l'intérieur d'une plage de plus de 0 à moins de 90 degrés d'un tronçon du premier collecteur.

5. Ensemble de plaque d'écoulement de fluide selon la revendication 1, dans lequel le deuxième collecteur reçoit au moins une des première et deuxième portions du fluide déchargé à travers au moins une portion d'une région de paroi latérale du deuxième collecteur.

6. Ensemble de plaque d'écoulement de fluide selon la revendication 5, dans lequel le deuxième collecteur a au moins une ouverture en tant que l'une des première et deuxième entrées de fluide déchargé, l'ouverture au moins au nombre de un occupant une plage angulaire à l'intérieur d'une plage comprise entre environ 0 et environ 180 degrés d'un tronçon du deuxième collecteur.

7. Ensemble de plaque d'écoulement de fluide selon la revendication 6, dans lequel l'ouverture au moins au nombre de un occupe une plage angulaire à l'intérieur d'une plage de plus de 0 à moins de 90 degrés d'un tronçon du deuxième collecteur.
